# EUROPEAN PATENT SPECIFICATION

(11) **EP 1 142 412 B1**
(45) Date of publication and mention of the grant of the patent: **15.08.2007**
(21) Application number: 99964838.9
(22) Date of filing: 07.12.1999
(51) Int. Cl.: H04Q 7/38, H04Q 7/34

(54) **A METHOD AND ARRANGEMENT RELATING TO RADIO COMMUNICATIONS**
VERFAHREN UND VORRICHTUNG IM BEZUG ZU FUNKKOMMUNIKATION
PROCEDE ET DISPOSITIF SE RAPPORTANT A DES COMMUNICATIONS RADIO

(30) Priority: 18.12.1998 SE 9804430
(43) Date of publication of application: 10.10.2001
(73) Proprietor: TELEFONAKTIEBOLAGET LM ERICSSON (publ), 164 83 Stockholm (SE)
(72) Inventor: ANEHILL, Michael, S-169 38 Solna (SE); LUNDBORG, Tomas, S-112 40 Stockholm (SE)
(74) Representative: Fäldt, Per-Henrik
(86) International application number: PCT/SE1999/002282
(87) International publication number: WO 2000/038464

(56) References cited:
- WO-A1-98/03030
- WO-A1-98/53630
- WO-A1-98/59509
- GB-A- 2 297 885
- US-A- 5 751 767

## Description

### FIELD OF INVENTION

The present invention relates to methods and arrangements pertaining to radio communications, and more particularly to those parts of this field that are concerned with the estimation of speech quality in speech communication where a radio channel is used.

### BACKGROUND OF THE INVENTION

Conventional Public Land Mobile telephone Networks (PLMN) - in other words cellular radio telephony systems - include a land system and one or more mobile stations. The land system normally includes at least one Mobile Services switching Centre (MSC) which is connected to one or more radio base stations - these being referred to simply as base stations hereinafter. One or more of the MSCs is/are normally connected to a Public Switched Telephone Network (PSTN), in other words to a traditional non-mobile telephony system. Each base station serves a geographical area known as a cell. Mobile stations situated in the cell communicate with the base station via a radio interface. The mobile station is able to communicate with other mobile stations in the PLMN-net or with telephones connected to the PSTN, via the base station and the MSC.

At present, a plurality of multiple access or multiplexing methods are used to coordinate radio communication between the base stations and the mobile stations. The most common methods are Frequency Division Multiple Access (FDMA), Time Division Multiple Access (TDMA) and spread spectrum techniques, also known as Code Division Multiple Access (CDMA) or code multiplex.

In FDMA, an available radio frequency space is divided into a number of (narrow) band-pass channels. In respective communication between the base station and a given mobile station, one of the band-pass channels is used for uplink (mobile station to base station) and another of said band-pass channels is used for downlink (base station to mobile station) - no other mobile stations in the cell uses any of these band-pass channels. All types of band-pass modulation (both digital and analog) with sufficiently small bandwidth can be used. The FDMA system requires no synchronisation. FDMA is used primarily in the older analog PLMN, such as the Nordic Mobile Telephone system (NMT) and the Advanced Mobile Phone System (AMPS), for instance.

An available radio frequency space is also normally divided into a number of band-pass channels in the TDMA system, these latter band-pass channels having a much greater bandwidth than in the case of the FDMA system. However, theoretically the available radio frequency space may consist of a single band-pass channel. In respect to communication between a given mobile station and the base station, one of the band-pass channels is normally used for uplink and another of said channels used for downlink, although theoretically it should be possible to use one of the band-pass channels both for uplink and downlink. However, the aforesaid mobile station and base station does not have constant access to the two band-pass channels, but are only able to utilise these channels over a predetermined time interval, so-called time slots. The time slots used for uplink are normally time shifted in relation to the time slots used for downlink, meaning that the mobile stations will not transmit and receive simultaneously. TDMA is used in several digital PLMNs. For instance, such as the Global System for Mobile communications (GSM) and the D-AMPS system (Digital-AMPS) .

Normally, it is not possible to describe the spread spectrum techniques in the same simple terms as those that can be used to describe the FDMA and TDMA access methods. However, a common feature of the spread spectrum techniques is that they use radio signals whose bandwidth is much greater than the simultaneously transmitted information, which results in good interference immunity. The most common spread spectrum techniques are frequency jumping and the DS system (Direct Sequence) . For instance, the U.S. Standard IS-95 (Interim Standard) describes one form of the DS system.

In digital PLMN systems, sound (speech) that has been recorded with a microphone is discretised and digitalised. The digitalised sound is compressed further with a speech coder. The digital information from the speech coder is channel coded with an error correcting code and combined with other digital information in a frame, which is transmitted via the radio interface. In the case of TDMA-systems, normally one frame is transmitted in each time slot. Each frame thus includes a number of bits that represent speech. The speech bits are normally divided into classes with respect to their significance for speech reproduction. In the D-AMPS system, each frame includes 244 speech bits, which are divided into classes designated 1A, 1B and 2. The speech bits belonging to class 1A are the most important with respect to speech reproduction. If one of the speech bits belonging to class 1A is wrong, speech cannot be reproduced from the frame and must be generated with the aid of an algorithm which takes earlier received frames into account. However, speech reproduction is not as sensitive to errors in the speech bits belonging to classes 1B and 2. Furthermore, error correcting coding can correct bit errors in the speech bits, provided that the total number of bit errors is not too great. When one of the frames becomes unusable for speech reproduction, it is said that frame erasure has occurred. The number of frame erasures per unit of time is here designated the Frame Erasure Rate (FER).

A user of a mobile station will, of course, constantly obtain an acceptable speech quality. However, speech quality is a user subjective assessment. Naturally, the PLMN system is unable in practice to ask the user how he/she experiences the speech quality, but must estimate the speech quality on the basis of objective, measurable parameters. Speech quality is normally estimated in present-day PLMN systems with the aid of Bit Error Rates (BER) - in other words, the proportion of bit errors in relation to the total number of bits transmitted, normally expressed in percent - or in the strength of the signal received by the mobile station, or by a combination of these parameters.

Several measures can be taken in the PLMN systems when speech quality is excessively bad. One option is to switch channels. In these contexts, a channel switch or change is referred to as hand-off or hand-over. When the change of channel is made to a channel that is allocated to the base station with which the mobile station communicates at that moment in time, this is called the intracell hand-off. On the other hand, if the change of channel is made to a channel that is allocated to another of said base stations, this is referred to as intracell hand-off. Another option of attempting to improve speech quality is for the base station to increase its transmission power. However, these measures undertaken to improve speech quality are not without their problems. Excessive use of hand-off can result in impairment of speech quality instead, since hand-off incurs in speech transmission an interruption that can be considered disturbing by the user. There is also the danger of an ongoing call being lost completely, when hand-off is made. The hand-off procedure also considerably loads the processor capacity of the PLMN. Utilisation of the capacity of the PLMN is also impaired, because it is necessary to reserve channels in order to enable hand-off to be carried out. An increase in the transmission power of the base stations results in greater interference in the PLMN, which also results in impaired capacity exploitation.

GB, A, 2297885 discloses a way of estimating a communication quality of a radio channel. The communication quality is estimated to be degraded unless a first and a second criterion are both met. The first criterion is met when an average number of times during a predetermined period that a bit error rate (BER) exceeds a maximum value is smaller than a first threshold. The second criterion is met when an average number of times during predetermined time period that a received signal strength indicator (RSSI) is below a predetermined minimum value is smaller than a second threshold.

It will be understood from the aforegoing that it is desirable to obtain objective methods that can be used in the PLMNs to estimate speech quality to a degree that will well be in accord with the user's subjective judgement of speech quality. This will enable a number of unnecessary hand-off procedures to be reduced or eliminated. Neither would the transmission power from the base stations be unnecessarily high, therewith resulting in less interference.

### SUMMARY OF THE INVENTION

The present invention mainly addresses the problem of objectively estimating the speech quality achieved with a radio channel for speech communication between a mobile station and a base station in a digital radio telephony system (PLMN), wherewith estimation of the speech quality received shall coincide with the user's subjective appreciation of speech quality to the best possible extent.

According to one aspect of the invention the above-stated problem is solved with a method according to claim 1 and a corresponding arrangement according to claim 9.

According to another aspect of the invention particular uses of the method are set out in claims 7 and 8.

One significant advantage afforded by the invention is that it enables speech quality to be estimated objectively in a PLMN in an effective manner, therewith enabling the general speech quality and capacity utilization in the PLMN to be enhanced.

The invention will now be described in more detail with reference to preferred exemplifying embodiments thereof and also with reference to the accompanying drawings.

### BRIEF DESCRIPTION OF THE DRAWINGS

Figure 1 is a block diagram illustrating an example of the invention and describing a communications system that includes a PLMN.
Figure 2 is a block diagram that describes a first mobile station and a first base station included in the PLMN.
Figure 3 is a time diagram that illustrates the receipt of frames by the first mobile station.
Figure 4 is a time diagram that includes a curve which describes the instantaneous signal strength received by the first mobile station.
Figure 5 is a time diagram that includes a curve which describes the instantaneous signal strength received by the first mobile station when this mobile station has a greater speed than the mobile station in Figure 4, or when the fading distance is shorter.
Figure 6 is a diagram that includes a number of isoquality curves.
Figure 7 is a diagrammatical illustration of one of the isoquality curves shown in Figure 6.
Figure 8 is a diagram that shows how the curve in Figure 7 can be approximated with simpler curve forms.
Figure 9 is a flowchart according to one example of the invention that describes a method of objectively estimating the quality of speech received by the first mobile station.
Figure 10 is a flowchart that describes a method of objectively estimating the quality of speech received by the first mobile station, in accordance with another example of the invention.
Figure 11 is a flowchart that describes a method of channel allocation in the Public Land Mobile telephone Network (PLMN), in accordance with one exemplifying embodiment of the invention.
Figure 12 is a flowchart that describes a method of regulating transmission power from a base station, in accordance with one embodiment of the invention.

### DESCRIPTION OF PREFERRED EMBODIMENTS

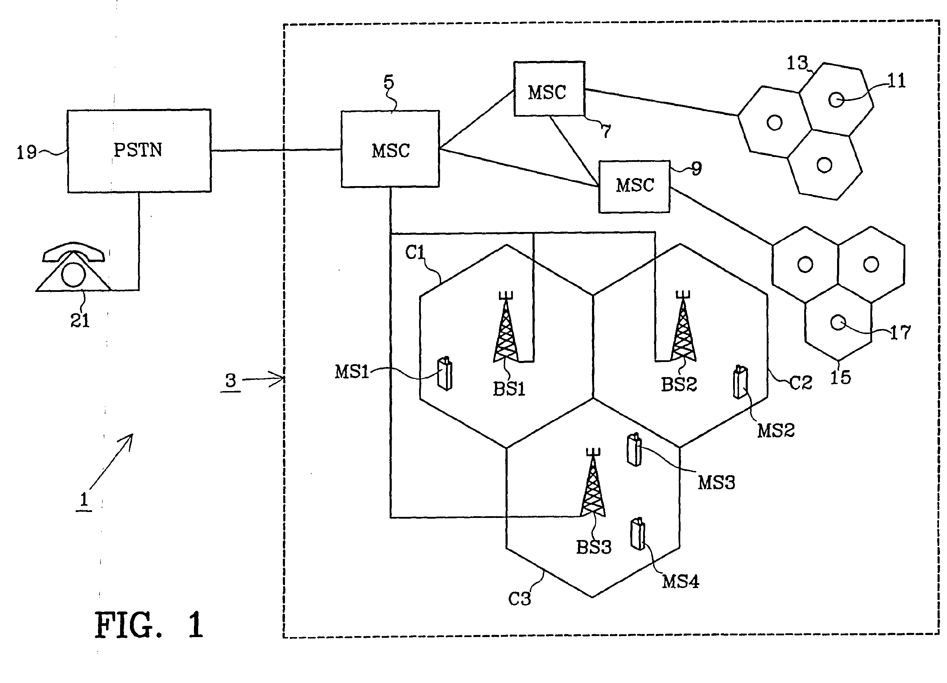

Figure 1 is a block diagram which describes a communications system 1. The communications system 1 includes a digital PLMN 3. The PLMN 3 includes a first MSC 5 (Mobile Services Switching Centre) which is connected by lines to a first, a second and a third base station BS1, BS2 and BS3. The first, second and third base stations BS1, BS2 and BS3 are each intended to serve a respective cell C1 C2 and C3. A first mobile station MS1 is located in the cell C1 served by the first base station BS1, a second mobile station MS2 is located in the cell C2 served by the second base station BS2, and third and fourth mobile stations MS3 and MS4 are located in the cell C3 served by the third base station BS3. The PLMN 3 also includes second and third MSCs 7 and 9, these switching centres being connected to each other and to the first MSC 5 by connecting lines. Similar to the first MSC 5, the second MSC 7 is connected to a first group of base stations via connecting lines, one of these base stations being identified by the reference numeral 11 in Figure 1. The base stations 11 in the first group are intended to serve associated cells, one of these cells being identified by the reference numeral 13 in Figure 1. Mobile stations (not shown) are also located in the cells 13 corresponding to the first group of base stations 11. The third MSC 9 is connected by lines to a second group of base stations, in a manner similar to that of the first MSC 5, one of said base stations being identified by reference numeral 17 in Figure 1. The base stations 17 in the second group of base stations are intended to serve associated cells, one of said cells being identified by reference numeral 15 in Figure 1. Mobile stations (not shown) are also located in the cells 15 corresponding to the second group of base stations 17.

The communications system 1 in Figure 1 includes a PSTN 19 (Public Switched Telephone Network), in other words a conventional (non-mobile) telephony system. The first MSC 5 is connected to the PSTN 19. A first (non-mobile) telephone 21 is connected to the PSTN 19.

The communications system 1 shown in Figure 1 is adapted to enable the first mobile station MS1 to communicate with other units in the communications system 1. Thus, the first mobile station MS1 is able to communicate with, for instance, the second mobile station MS2 via the first base station BS1, the first MSC 5 and the second base station BS2. The first mobile station MS1 is also able to communicate with the mobile stations in the cells 13 corresponding to the first group of base stations 11, via the first base station BS1, the first MSC 5, the second MSC 7 and the base stations 11 in the first group. The first mobile station MS1 is, of course, able to communicate correspondingly with the mobile stations in the cells 15 corresponding to the second group of base stations 17. The first mobile station is also able to communicate with the first telephone 21, via the first base station BS1, the first MSC 5 and the PSTN 19.

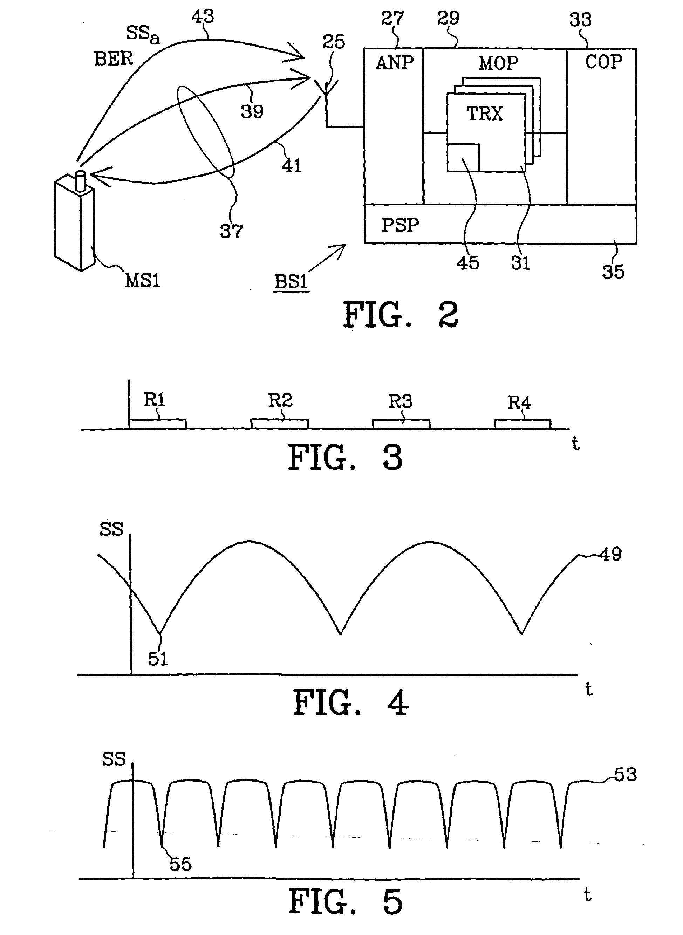

Figure 2 is a block diagram which shows the first mobile station MS1 and the first base station BS1 in more detail. The first base station BS1 includes an antenna unit 25 which is connected to an antenna near part 27. The first base station BS1 also includes a MOdem Part 29 that has an array of transceivers 31 connected to the antenna near part 27 that forms an interface for the transceiver 31 against the antenna unit 25. The first base station BS1 also includes a Control Part 33 to which the transceivers 31 are connected. The control part 33 is adapted to control the work of the first base station BS1 and to form an interface against the line that connects the first base station BS1 to the first MSC 5. The first base station BS1 also includes a power supply part 35.

Figure 2 shows the first mobile station MS1 in speech communication with another unit in the communications system 1, for example the second mobile station MS2. Radio communication between the first base station BS1 and the first mobile station MS2 takes place on a radio channel 37 having an uplink 39 and a downlink 41. The PLMN 3 is adapted to use TDMA. Accordingly, in the illustrated example the uplink 39 is comprised of a first sequence of time slots in a first band-pass channel, and the downlink 41 is comprised of a second sequence of time slots in a second band-pass channel in a corresponding fashion. Frames containing speech bits are sent in the first time slot sequence from the first mobile station MS1 to the first base station BS1, while in the second time slot sequence frames containing speech bits are sent correspondingly from the first base station BS1 to the first mobile station. The first mobile station MS1 functions to measure the mean signal strength SSₐ and the bit error rate (BER) on the downlink 41 over a predetermined measuring period. The first mobile station is also adapted to send information relating to the measured mean signal strength SSₐ and the measured bit error rate, BER, to the first station BS1 via a control channel 43.

A radio signal sent on downlink 41 from the first radio base station BS1 will normally reach the first mobile station MS1 along different paths, due to reflections against different objects, such as against buildings, cars or some other object in the surroundings. When a difference in wavelength between signals that have propagated along different paths to a given point corresponds to a phase shift of about 180° between the signals, the signal will be extinguished due to destructive interference. This phenomenon is very well known to the person skilled in this art and is known as Rayleigh fading. Rayleigh fading implies that the strength of radio signals from the first base station BS1 disappears entirely or is very low at certain points in space. As the first mobile station MS1 moves in this space, it will occasionally pass these points of very low or no signal strength, wherewith the signal strength received by the first mobile station will disappear entirely or become correspondingly very low. In a corresponding manner, Due to the position of the first mobile station MS1 in said space Rayleigh fading will occur at the first base station BS1 when radio signals are sent from the first mobile station MS1, a phenomenon which is well known to the person skilled in this art. The frequency at which the signal strength received by the first mobile station MS1, or in the present case the first base station BS1, is considerably weakened as a result of Rayleigh fading is normally referred to as the fading frequency. The fading frequency depends on the density in said space of points that give rise to Rayleigh fading on the one hand and the speed at which the first mobile station MS1 moves on the other hand.

Figure 3 is a time diagram which illustrates schematically how four frames R1-R4 are sent to the first mobile station MS1 via the downlink 41.

Figure 4 is a corresponding time diagram showing a curve 49 which describes schematically the instantaneous signal strength SS received by the first mobile station MS1 on the downlink 41. The curve in Figure 4 has a number of troughs, one of which is referenced 51, where the signal strength SS is very low as a result of the first mobile station MS1 passing points in the space where Rayleigh fading occurs. The troughs 51 in Figure 4 cause a relatively large number of bit errors in the first and the fourth frames R1 and R4 respectively, whereas the second and the third frames R2 and R3 respectively are not hardly affected at all by the troughs 51. Despite the first and the fourth frames being coded with an error correcting code, the number of bit errors is large enough to cause these frames to be erased, resulting in poorer speech quality.

Figure 5 is a time diagram showing a curve 53 that describes schematically an alternative course followed by the instantaneous signal strength SS received by the first mobile station MS1 on downlink 41. The curve 53 in Figure 5 has a number of troughs caused by Rayleigh fading, one of these troughs being referenced 55. The fading frequency, however, is greater than in Figure 4, either because the first mobile station MS1 is moving at a higher speed or because the points at which Rayleigh fading occurs in space are denser, for instance. The troughs 55 in Figure 5 give rise to bit errors in all of the frames R1-R4. However, the troughs 51 in Figure 4 and the troughs 55 in Figure 5 give rise to the same bit error rates. The bit errors caused by the troughs 55 in Figure 5 are more uniformly distributed in the various frames R1-R4, therewith increasing the likelihood that the error correcting coding will be able to correct the bit errors that occur, therewith reducing the probability of frame erasure.

The first base station BS1 includes means 45 for measuring the fading frequency on the uplink 39. The fading frequency measuring means 45 are connected to the transceivers 31 and includes in the illustrated case a computer having associated software (not shown).

According to the invention, it has been observed that the fading frequency measured at the first base station BS1 on the uplink 39 corresponds generally to the fading frequency measured at the first mobile station on the downlink 41. This is because electromagnetic waves propagate in a similar manner from the first mobile station MS1 to the first base station BS1 as from the first base station BS1 to the first mobile station MS1, and consequently the destructive self-interference resulting from reflections follows a similar course on the uplink 39 and the downlink 41 respectively. Consequently, it is irrelevant whether the fading frequency is measured at the first base station BS1 on the uplink 39 or at the mobile station on the downlink 41, since essentially the same measurement values will be obtained in both instances. In the Figure 2 example, the fading frequency is measured at the first base station BS1 because this base station BS1 has a greater capacity for such a measuring process than the first mobile station MS1.

Frame erasure greatly affects the user's estimation of the quality of speech obtained with the first mobile station MS1. It will therefore be seen from the discussion with reference to Figures 3 thru 5 that the speech quality experienced by the user will be affected partly by the bit error rate on the downlink 41 and partly by the fading frequency on the downlink 41. For a fixed value of the bit error rate, the speech quality will have a positive (growing) relationship with the fading- frequency. Correspondingly, the speech quality for a fixed value of the fading frequency will have a negative (diminishing) relationship with the bit error rate.

Ultimately, speech quality is the subjective experience of the users, although speech quality can be clarified, for instance by experimentation where the users give the speech quality experienced a grading (according to a predetermined scale such as from 0 to 5, for instance) corresponding to the different values of the bit error rate and the fading frequency. One method of processing the users' subjective estimation of the speech quality is to define a quality function Q (BER, f) that is a function of the bit error rate (BER) and the fading frequency (f). In this case, the purpose of the quality function Q(BER,f) is to reflect with a predetermined degree of accuracy how the users experience the speech quality in relation to bit error rate and fading frequency as observed experimentally. For instance, there can be compiled a table which shows the users' assessments of speech quality for a predetermined number of combinations of the values of the bit error rate and the fading frequency. The quality function Q(BER,f) is defined on the basis of the table compiled, wherewith the values of the quality function corresponding to combinations of the bit error due to the position of the first mobile station MS1 in said space rates and the fading frequency not included in the table being obtained by interpolation or the like from among the values listed in the table. Alternatively, the quality function Q(BER,f) can be defined on the basis of a predetermined mathematical hypothesis that includes a number of constants, said constants being determined on the basis of experiments so that the predetermined mathematical hypothesis will give the best possible approximation of the users' appreciation of speech quality. The quality function Q(BER,f) is set linearly according to: Q(BER, f) = a·BER + b.f, where a and b are constants that are determined experimentally so that the linear hypothesis will to the best possible extent approximate the users' estimation of the speech quality relative to the bit error rate (BER) and the fading frequency (f).

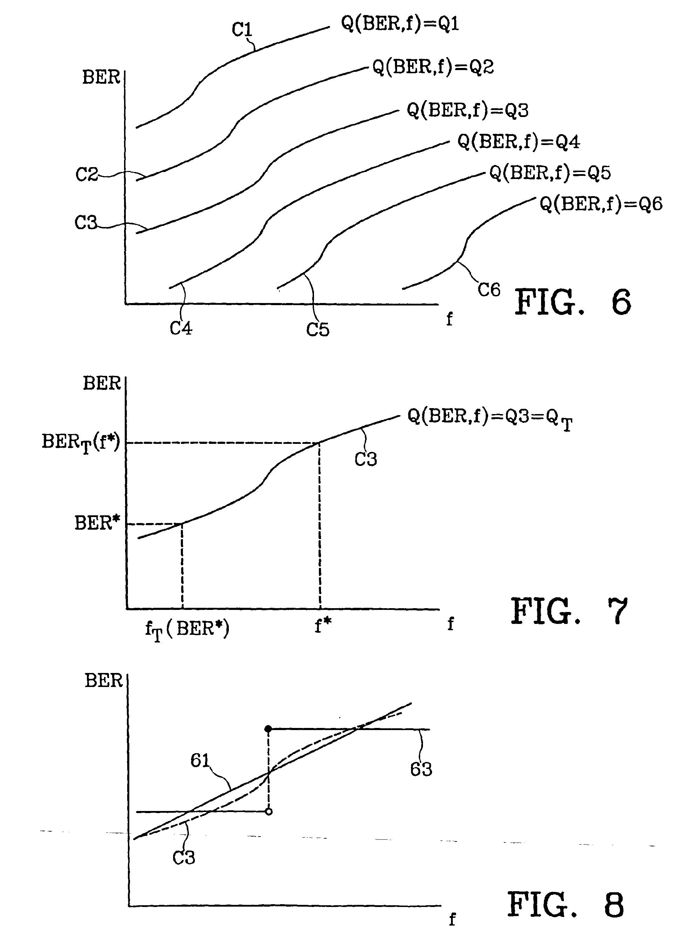

Figure 6 is a diagram having a vertical axis which corresponds to the bit error rate (BER) and a horizontal access corresponding to the fading frequency (f). The diagram of Figure 6 includes six isoquality curves C1-C6, i.e. curves that correspond to constant speech quality. Thus, each of the isoquality curves C1-C6 corresponds to a constant value Q1-Q6 of the quality function Q(BER,f). The isoquality curves C1-C6 have a positive slope, which reflects that an increase in the bit error rate from a quality aspect is compensated by an increase in the fading frequency.

For instance, let the value Q3 of the quality function Q(BER,f) be a predetermined threshold value Q_{T} for the quality value that corresponds to the lowest acceptable speech quality. Figure 7 shows solely the third isoquality curve C3 in a diagram similar to the diagram of Figure 6. Thus, all points on or beneath the third isoquality curve C3 correspond to combinations of bit error rates and fading frequency for which the speech quality is acceptable. Points above the third quality curve C3 therewith correspond to combinations of bit error rates and fading frequencies for which the speech quality is not acceptable. For a given value f^{*} of the fading frequency, the third isoquality curve C3 defines a bit error rate threshold value BER_{T}(f^{*}), as illustrated in Figure 7. The bit error rate threshold value BER_{T} (f^{*}) denotes the highest bit error rate value for which speech quality can be accepted at the given fading frequency value f^{*}. According to an alternative approach, the third isoquality curve C3 for a given value BER^{*} of the bit error rate defines a fading frequency threshold value f_{T}(BER^{*}), as illustrated in Figure 7. The fading frequency threshold value f_{T}(BER^{*}) denotes the lowest fading frequency value for which speech quality is acceptable at the given value of the bit error rate BER^{*}.

The third isoquality curve C3 shown in Figure 7 has a relatively complicated form. For practical use, it is possible to approximate the third isoquality curve C3 with simpler curve forms. Figure 8 is a diagram similar to the diagrams of Figures 6 and 7 illustrating how the third isoquality curve C3 (broken line) is approximated with a first and a second curve form 61 and 63. The first curve form 61 is a rectilinear approximation of the third isoquality curve C3. The second curve form 63 implies that the third isoquality curve C3 is approximated with a step function. In Figure 8, the second curve form 63 corresponds to a step function with one step, although the step function may include several steps in order to better approximate the third isoquality curve C3.

It is not necessary to take the roundabout route via the quality function Q(BER,f) in order to obtain the third isoquality curve C3 or its approximation. Alternatively, there can be carried out experiments which are directed to obtaining the third isoquality curve C3 or approximations thereof.

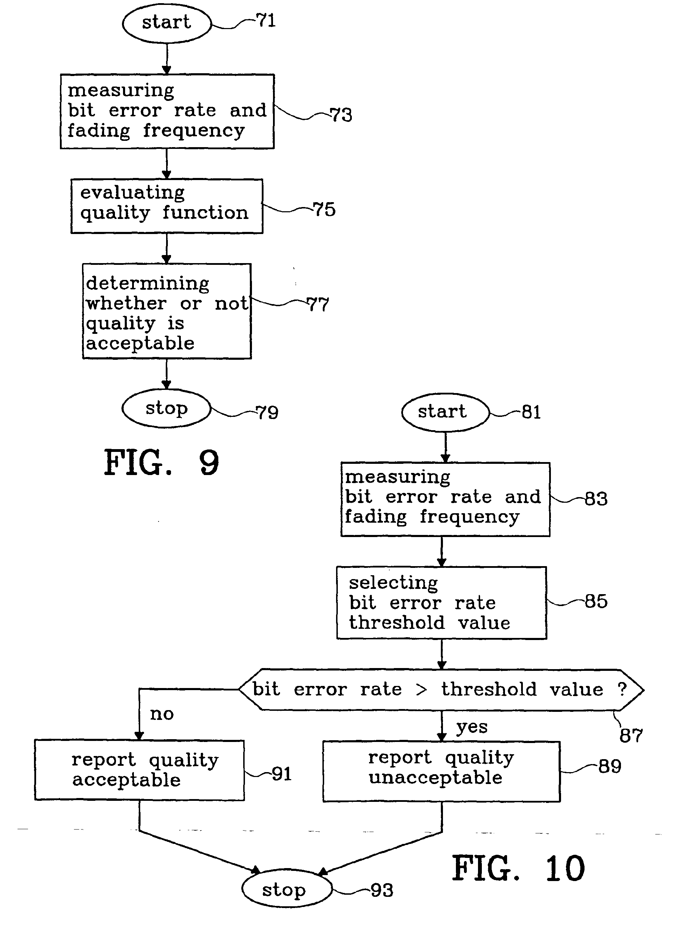

Figure 9 is a flowchart describing by way of example a method of objectively estimating the speech quality obtained with the first mobile station MS1.

After a start 71, the procedure described in Figure 9 begins with a first step 73 in which the bit error rate BER is measured by the first mobile station MS1 on the downlink 41 and the fading frequency f is measured by the first base station BS1 on the uplink 39. Alternatively, the fading frequency f is measured by the first mobile station MS1 on the downlink 41 instead. Information relating to the measured bit error rate BER is sent from the first mobile station MS1 to the first base station BS1 on the control channel 43.

The method illustrated in Figure 9 continues with a second step 75 in which the quality function Q (BER, f) is evaluated by the first base station BS1 in respect of the measured bit error rate BER and the measured fading frequency f. The quality function Q(BER,f) may alternatively be evaluated somewhere else, for instance in the first MSC 5 or in some other node in the PLMN. In the case of the example shown in Figure 9, the quality function Q(BER,f) is described on the basis of a table listing experimental data and stored in a memory (not shown) in the first base station BS1. The quality function Q(BER,f) may alternatively be defined in some other way, for instance on the basis of a mathematical hypothesis or the like, as described above. In the Figure 9 example, the quality function Q(BER,f) is defined so that the higher the value taken by the quality function Q(BER,f) the greater the speech quality; alternatively, the quality function Q(BER,f) may be defined in the reverse manner, so that a high value of the quality function Q(BER,f) indicates instead a low speech quality.

The method described in Figure 9 continues with a third step 77, in which the first base station BS1 decides whether the speech quality is acceptable or not, on the basis of the estimated quality function Q(BER,f). In this respect, the estimated quality function is compared with a threshold value Q_{T}. The speech quality is considered to be acceptable, when the estimated quality function Q(BER,f) does not exceed the threshold value Q_{T}. In the Figure 9 example, the threshold value Q_{T} is a predetermined value that is stored in the memory device (not shown) in the first base station BS1. Alternatively, the threshold value Q_{T} is a value that varies in keeping with the traffic load on the PLMN 3, for instance. The threshold value Q_{T} is varied, for instance, to correspond to a lower speech quality when the traffic load is high, and a higher speech quality when the traffic load is low. The method illustrated in Figure 9 is terminated after the third step 77, as indicated by a stop 79.

The method illustrated in Figure 9 may, of course, be used mutatis mutandis to estimate the quality of speech obtained in the first base station BS1 on the uplink 39. Naturally, the bit error rate will be measured at the first base station BS1 on the uplink 39 in such case.

The first base station BS1 includes means for carrying out the method described in Figure 9, or alternative methods according to the invention. For instance, the first base station BS1 includes to this end a computer and associated software, or circuitry having hardware components, or a combination of these means. The invention thus also includes arrangements for carrying out the method described in Figure 9 and alternative methods according to the invention.

Figure 10 is a flowchart illustrating by way of example a further inventive method for estimating objectively the quality of speech obtained with the first mobile station MS1.

After a start 81, the method described in Figure 10 continues with a first step 83 in which the bit error rate, BER, is measured by the first mobile station MS on the downlink 41, and the fading frequency f is measured by the first base station BS1 on the uplink 39. Alternatively, the fading frequency f is measured by the first mobile station MS on the downlink 41, wherewith information relating to the measured fading frequency f is sent to the first base station. Information relating to the measured bit error rate, BER, is sent from the first mobile station MS1 to the first base station BS1 on the control channel 43.

The method described in Figure 10 continues with a second step 85, in which a threshold value BER_{T}(f) for the bit error rate is selected in dependence on the measured fading frequency f. The threshold value BER_{T}(f) for the bit error rate is selected from a threshold value table that includes data corresponding to the third isoquality curve C3, or data that describes curve forms which approximate the third isoquality curve C3. The threshold value table is stored in storage devices (not shown) placed, for instance, in the first base station BS1. As explained above, the threshold value table defines the threshold values of bit error rates for a predetermined number of fading frequency values. If the table does not include a value which corresponds to the measured fading frequency f, the threshold value BER_{T}(f) for the bit error rates is selected by interpolation or the like from the values found in the threshold value table.
The method described in Figure 10 continues with a third step 87 in which it is decided whether or not the measured bit error rate, BER, exceeds the threshold value BER_{T}(f) selected for the bit error rate. If it is determined in the third step 87 that the measured bit error rate, BER, exceeds the threshold value BER_{T}(f) selected for the bit error rate, the speech quality is unacceptable and the method continues with a fourth step 89 in which it is reported that the speech quality is unacceptable. If, on the other hand, it is determined in the third step 87 that the measured bit error rate, BER, does not exceed the threshold value BER_{T}(f) selected for the bit error rate, the speech quality is acceptable and the method continues with a fifth step 91 in which it is reported that the speech quality is acceptable. The method described in Figure 10 is terminated after the fourth or the fifth step 89 or 91, as illustrated by a stop 93.

The method described in Figure 10 can, of course, be used mutatis- mutandis to estimate the quality of speech obtained in the first base station BS1 on the uplink 39. In such a case, the bit error rate will, of course, be measured at the base station BS1 on the uplink 39.

In a method alternative to the method described in Figure 10, the second step 85 is replaced with a step in which a fading frequency threshold value f_{T}(BER) is, instead, selected in accordance with the measured bit error rate, BER. However, the same threshold value table can be used. The speech quality is considered to be unacceptable when the measured fading frequency f is beneath the selected fading frequency threshold value F_{T}(BER) . Otherwise, the speech quality is considered to be acceptable.

The first base station BS1 includes means for carrying out the method described in Figure 10, and alternative methods according to the invention. For instance, the first base station BS1 includes to this end a computer and associated software, or circuitry having hardware components, or a combination of these means. The invention thus also relates to arrangements for carrying out the method described in Figure 10 and also alternative methods according to the invention. There have been described in the aforegoing inventive methods and inventive arrangements for objectively estimating the quality of speech on the radio channel 37. It is also proposed in accordance with the invention that these methods and arrangements are used in the PLMN 3 with hand-off procedures and in power-regulating procedures in order to improve speech quality and capacity utilisation in the PLMN 3.

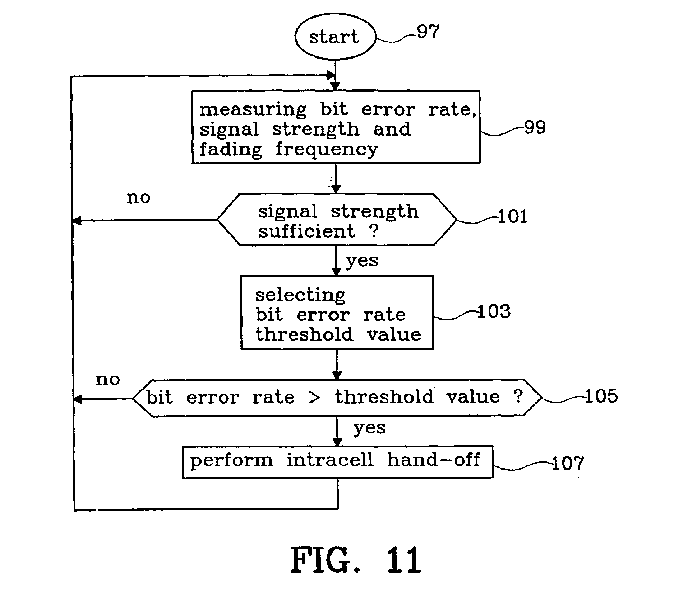

Accordingly, Figure 11 shows by way of example a flowchart that describes a method of channel allocation in the PLMN 3.

After a start 97, the procedure described in Figure 11 starts with a first step 99 in which the bit error rate, BER, and the mean signal strength SSₐ are measured by the first mobile station MS1 on the downlink 41, and the fading frequency is measured by the first base station BS1 on the uplink 39. Information relating to the measured bit error rate, BER, and the measured mean signal strength SSₐ is sent from the first mobile station MS1 to the first base station BS1 on the control channel 43.
The method described in Figure 11 continues with a second step 101 in which it is determined by the first base station whether or not the measured mean signal strength SSₐ is sufficiently high. In this respect, the measured mean signal strength is compared with a predetermined value, wherewith the measured mean signal strength is considered to be sufficiently strong if it exceeds the predetermined value. When it is determined in the second step 101 of the method described in Figure 11 that the measured mean signal strength is sufficient strong, the method is continued with a third step 103, otherwise the procedure is re-started from the first step 99.

In the third step 103 of the method or procedure described in Figure 11, a threshold value BER_{T}(f) is selected for the bit error rate in accordance with the measured fading frequency f. This is done in a manner corresponding to that carried out in the method described in Figure 10.

The method described in Figure 11 continues with a fourth step 105 in which it is determined whether or not the measured bit error rate, BER, exceeds the threshold value BER_{T}(f) selected for the bit error rate. If it is determined in the fourth step 105 that the measured bit error rate, BER, does not exceed the threshold value BER_{T}(f) selected for the bit error rate, the speech quality is considered to be acceptable and the method is re-started from the first step. Otherwise, the speech quality is considered unacceptable and the method continues with a fifth step 107. The fifth step 107 of the method described in Figure 11 involves making an intracell hand-off. In this respect, the first base station sends in intracell hand-off request to the first MSC 5. The first MSC 5 selects a new radio channel to which intracell hand-off shall be made and sends information relating to the selected, new radio channel to the first base station BS1, which, in turn, sends information relating to the selected, new radio channel to the first mobile station MS1. The first mobile station MS1 and the first base station BS1 then establish communication on the selected, new radio channel. The method described in Figure 11 is then re-started from the first method step after the fifth step 107, wherewith the measurements made refer, of course, to the selected new radio channel.

Speech quality is estimated in the method described in Figure 11 in the same way as it is estimated in the method described in Figure 9, on the basis of the measured bit error rate, BER, and the measured fading frequency f while using the threshold value BER_{T}(f) for the bit error rate that is contingent on the measured fading frequency f. In an alternative to the method described in Figure 11, speech quality is instead estimated with the aid of the fading frequency threshold value f_{T}(BER) contingent on the measured bit error rate, BER, or with the aid of the quality function Q(BER,f), as described above.

The PLMN 3 includes means for carrying out the method described in Figure 11 or alternative methods according to the invention. For example, the first base station BS1 includes to this end a computer and associated software or circuitry that includes hardware components, or a combination of these means. The invention thus relates to arrangements for carrying out the method described in Figure 11 and alternative methods according to the invention.

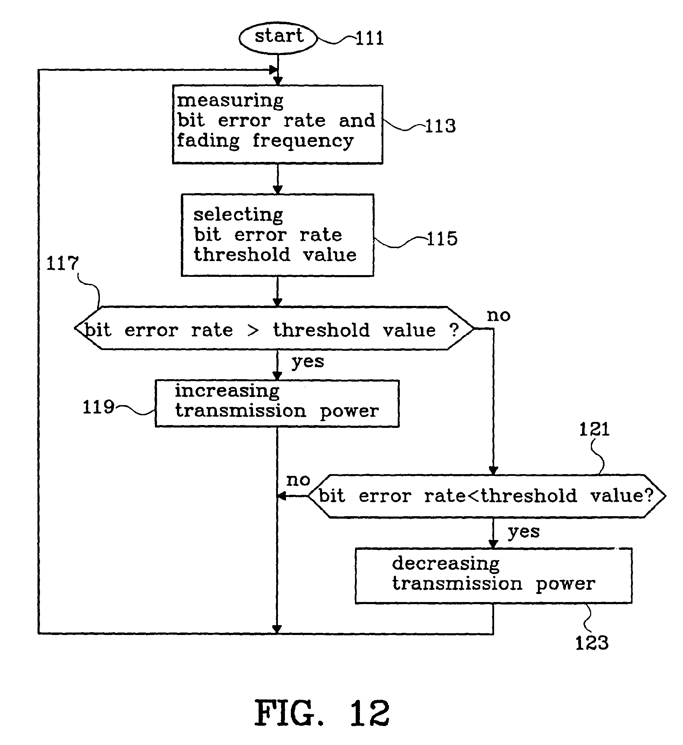

Figure 12 is a flowchart that describes a method of regulating transmission power of the first base station BS1, by way of example.

After a start 111, the method described in Figure 12 is commenced with a first step 113 in which the bit error rate, BER, is measured at the first mobile station MS1 on the downlink 41, and the fading frequency f is measured at the first base station BS1 on the uplink 39. Information relating to the measured bit error rate, BER, is sent from the first mobile station MS1 to the first base station BS1 on the control channel 43.

The method described in Figure 12 continues with a second step 115 in which a threshold value BER_{T}(f) is selected for the bit error rate on the basis of the measured fading frequency f. The procedure followed corresponds to the procedure followed in the method described in Figure 10.

The method described in Figure 12 continues with a first step 117 in which it is determined whether or not the measured bit error rate, BER, exceeds the selected threshold value BER_{T}(f) of the bit error rate. In this respect, if it is determined that the measured bit error rate, BER, exceeds the selected threshold value BER_{T}(f) of the bit error rate, the quality speech obtained with the first mobile station MS1 is poorer than can be accepted, wherewith the method described in Figure 12 continues with a fourth step 119.

In the fourth step 119 of Figure 12, the transmission power of the first base station BS1 is increased on the downlink 41, so as to improve the speech quality obtained with the first mobile station MS1. The first base station BS1 includes memory devices (not shown) in which there is stored a C/I table that includes data describing how a C/I value (carrier to interference ratio) relates to the bit error rate. Table 1 below exemplifies the formulation of one such C/I table. The first column in Table 1 discloses the bit error rates measured in so-called BER classes, while the second column discloses the values of the bit error rates that correspond to respective BER classes. Finally, the third column discloses the C/I values v0-v7 corresponding to respective BER classes. The numeral values of v0-v7 depend on which mobile telephony system is used and the conditions in the mobile telephony system concerned. The person skilled in this art will be able to establish the relationship between respective BER classes and respective C/I values v0-v7 in the mobile telephony system concerned, either by carrying out measurements and experiments in a controlled environment or by simulation. The experiment is performed, for instance, so as to generate a given C/I value, wherewith a bit error rate corresponding to is measured in a receiving unit.

**TABLE 1**

| **BER class** | **BER** | **C/I (dB)** |
|---|---|---|
| 7 | > 8 % | v7 |
| 6 | ]4 0, 8%] | v6 |
| 5 | ]2%,4%] | v5 |
| 4 | ]1%, 2%] | v4 |
| 3 | ]0.5%,1%] | v3 |
| 2 | ]0.1%, 0.5%] | v2 |
| 1 | ]0.01%,0.1%] | v1 |
| 0 | <0.01% | v0 |

With the aid of the C/I table, the first base station BS1 generates a first C/I value vi (measured in dB) corresponding to the measured bit error rate, BER, and a second C/I value vj (measured in dB) corresponding to the selected threshold value BER_{T}(f) of the bit error rate. The first base station BS1 increases the transmission power (measured in dB) by an extent that corresponds to a difference (vi-vj) between the first and the second C/I values vi and vj.

The method described in Figure 12 is re-started from the first step 113 upon completion of the fourth step 119. The method described in Figure 12 continues as described hitherto until it is determined in the third step 117 that the measured bit error rate, BER, does not exceed the selected threshold value BER_{T}(f) of the bit error rate.

If it is determined in the third step 117 illustrated in Figure 12 that the bit error rate does not exceed the selected threshold value of the bit error rate, the method described in Figure 12 continues with a fifth step 121. It is determined in the fifth step whether or not the measured bit error rate is below the threshold value of the bit error rate.

If it is determined in the fifth step 121 that the bit error rate is not below the threshold value of the bit error rate, the method described in Figure 12 is re-started from the first step 113.

If, instead, it is determined in the fifth step 121 in Figure 12 that the bit error rate is below the threshold value of the bit error rate, then the quality of the speech obtained with the first mobile station is better than what is just acceptable and the method continues with a sixth step 123. In the sixth step 123, the transmission power of the first base station BS1 is reduced. In this respect, the first base station generates with the aid of the C/I table a first C/I value vi (measured in dB) corresponding to the measured bit error rate, BER, and a second C/I value bj (measured in dB) corresponding to the selected threshold value BER_{T}(f) of the bit error rate. The first base station BS1 reduces the transmission power (measured in dB) by an extent corresponding to a difference (vj-vi) between the second and the first C/I values vj and vi. The method described in Figure 12 is re-started from the first step 113 upon completion of the sixth step 123.

It is determined in the method described in Figure 12 whether or not the quality of speech obtained with the first mobile station MS1 is better or worse than a quality that is just acceptable, the threshold values BER_{T}(f) for the bit error rates being used in a manner similar to that used in the method described in Figure 10. Alternatively, this determination can be made instead with the aid of the quality function Q (BER, f) in a manner similar to that used in the method described in Figure 9, or with the aid of the fading frequency threshold values f_{T}(BER), as explained above.

If the speech quality obtained with the first mobile station MS1 is worse than a quality that is only just acceptable, the transmission power of the first base station BS1 is increased in accordance with a predetermined algorithm in the method described in Figure 12. On the other hand, if the speech quality obtained with the first mobile station MS1 is better than the quality that is just acceptable, the transmission power is reduced in accordance with a corresponding algorithm. Thus, the intention of the method described in Figure 12 is to obtain an acceptable speech quality with the first mobile station whilst, at the same time, avoiding interference to the best possible extent, by avoiding an unnecessarily high transmission power. As an alternative to the method described in Figure 12, the transmission power is increased/reduced in some other way, for instance is increased/reduced in correspondence with a predetermined constant decibel value.

In a method alternative to the method described in Figure 12, the third step 117 and the fifth step 121 are modified by introducing a tolerance range so that measurement inaccuracies will not cause undesired transmission power swings. The selected threshold values used in the third step 117 and in the fifth step 121 will then differ slightly, such that the threshold value used in the third step 117 will be slightly higher than the threshold value used in the fifth step 121 and so as to achieve hysteresis in the control and therewith reduce the risk of undesired swings in the transmission power.

The invention has been illustrated in the above examples with reference to a PLMN having TDMA access. It will be understood, however, that the invention is not restricted to precisely this form of multiplex. The invention can be applied to all forms of multiplex where speech bits are transmitted via a radio interface in coded frames or similar information packets, for instance in CDMA access and primarily narrow band CDMA access, such as IS-95 and the like.

## Claims

1. A method of estimating the quality of a radio channel (37) having an uplink (39) and a downlink (41) for speech communication between a mobile station (MS1) and a radio base station (BS1) in a digital radio telephony system (3), said method comprising the step of:
a) measuring a bit error rate associated with the radio channel (37);
b) measuring a fading frequency associated with said radio channel (37), the fading frequency indicating a number of times per time unit that a received signal strength is significantly impaired; and
c) estimating a speech quality associated with the radio channel (37) on the basis of the measured bit error rate and the measured fading frequency, the method being **characterised in that** the step c) includes taking into account that an increase in the bit error rate from a speech quality aspect can be compensated for by an increase in the fading frequency.

2. A method according to Claim 1, **characterised in that** step c) includes the following part-steps:
d) defining a quality function as a function of the bit error rate and the fading frequency, the quality function indicating a speech quality which decreases with increasing bit error rate and increases with increasing fading frequency; and
e) generating a first value corresponding to an evaluation of the quality function for the measured bit error rate and the measured fading frequency, wherewith the first value indicates the speech quality.

3. A method according to Claim 2, **characterised in that** step c) also includes the following part-step: f) determining whether or not the speech quality is acceptable on the basis of the first value.

4. A method according to Claim 1, **characterised in that** step c) includes the following part-steps:
g) selecting a threshold value for the bit error rate on the basis of the measured fading frequency, the threshold value of the bit error rate being selected such that it has an essentially growing relationship to the measured fading frequency; and
h) determining that the speech quality is acceptable when the measured bit error rate does not exceed the threshold value of said bit error rate.

5. A method according to Claim 1, **characterised in that** step c) includes the following part-steps:
i) selecting a fading frequency threshold value on the basis of the measured bit error rate, the fading frequency threshold value being selected such that it will have a generally growing relationship to the measured bit error rate; and
j) determining that the speech quality is acceptable when the measured fading frequency is not below the fading frequency threshold value.

6. A method according to any one of Claims 1 to 5, **characterised in that** step a) includes measuring the bit error rate at the mobile station (MS1) on the downlink (41); and **in that** step b) includes measuring the fading frequency at the radio base station (BS1) on the uplink (39).

7. Use of a method according to any one of the claims 1 to 6 for estimating speech quality when performing channel allocation in respect of speech communication between a mobile station (MS1) and a base station (BS1).

8. Use of a method according to any one of the claims 1 to 6 for estimating speech quality when performing power control of a radio base station in a digital radio telephony system (3).

9. An arrangement for estimating the quality of a radio channel (37) having an uplink (39) and a downlink (41) for speech communication between a mobile station (MS1) and a radio base station(BS1) in a digital radio telephony system (3), said arrangement comprising:
means for measuring a bit error rate associated with the radio channel (37);
means for measuring a fading frequency associated with the radio channel (37), the fading frequency indicating a number of times per time unit that a received signal strength is significantly impaired; and
means for estimating speech quality associated with the radio channel (37) on the basis of the measured bit error rate and on the measured fading frequency, the arrangement being **characterised in that** the means for estimating speech quality are adapted to take into account that an increase in the bit error rate from a speech quality aspect can be compensated for by an increase in the fading frequency.

10. An arrangement according to Claim 9, **characterised in that** the means for estimating speech quality include:
means for defining a quality function as a function of the bit error rate and the fading frequency, the quality function indicating a speech quality which decreases with increasing bit error rate and increases with increasing fading frequency; and
means for generating a first value corresponding to an evaluation of the quality function for the measured bit error rate and the measured fading frequency, said first value indicating the speech quality.

11. An arrangement according to Claim 10, **characterised by** means for determining whether or not the speech quality is acceptable, on the basis of the first value.

12. An arrangement according to Claim 9, **characterised in that** the speech quality estimating means include:
means for selecting a bit error rate threshold value on the basis of the measured fading frequency, the means for selecting the bit error rate threshold value being adapted to select said threshold value so that it has an essentially growing relationship to the measured fading frequency; and
means for determining that the speech quality is acceptable when the measured bit error rate does not exceed the bit error rate threshold value.

13. An arrangement according to Claim 9, **characterised in that** the speech quality estimating means include:
means for selecting a fading frequency threshold value on the basis of the measured bit error rate, the means for selecting the fading frequency threshold value being adapted to select said threshold value so that it has an essentially growing relationship to the measured bit error rate; and
means for deciding that the speech quality is acceptable when the measured fading frequency is not below the fading frequency threshold value.

14. An arrangement according to any one of Claims 9 to 13 inclusive, **characterised in that** the means for measuring the bit error rate are adapted to measure said bit error rate at the mobile station (MS1) on the downlink (41); and **in that** the means for measuring the fading frequency are adapted to measure said fading frequency at the radio base station (BS1) on the uplink (39).

## Patentansprüche

1. Verfahren zum Bewerten der Qualität eines Funkkanals (37), welcher einen Uplink (39) und einen Downlink (41) aufweist, für Sprachkommunikation zwischen einer Mobilstation (MS1) und einer Funk-Basisstation (BS1) in einem digitalen Funk-Telefoniesystem (3), wobei das Verfahren den Schritt umfasst:
a) Messen einer Bitfehlerrate, welche dem Funkkanal (37) zugeordnet ist;
b) Messen einer Fading-Frequenz, welche dem Funkkanal (37) zugeordnet ist, wobei die Fading-Frequenz eine Anzahl von Zeitpunkten pro Zeiteinheit anzeigt, zu welchen eine empfangene Signalstärke signifikant beeinträchtigt ist; und
c) Bewerten einer Sprachqualität, welche dem Funkkanal (37) zugeordnet ist, auf der Basis der gemessenen Bitfehlerrate und der gemessenen Fading-Frequenz, wobei das Verfahren **dadurch gekennzeichnet ist, dass** der Schritt c) ein Einberechnen umfasst, dass ein Ansteigen in der Bitfehlerrate, von einem Aspekt der Sprachqualität, kompensiert werden kann durch ein Ansteigen in der Fading-Frequenz.

2. Verfahren nach Anspruch 1, **dadurch gekennzeichnet, dass** Schritt c) die folgenden Teilschritte umfasst:
d) Definieren einer Qualitätsfunktion als eine Funktion der Bitfehlerrate und der Fading-Frequenz, wobei die Qualitätsfunktion eine Sprachqualität anzeigt, welche mit ansteigender Bitfehlerrate abnimmt und mit ansteigender Fading-Frequenz ansteigt; und
e) Erzeugen eines ersten Werts, entsprechend einer Auswertung der Qualitätsfunktion für die gemessene Bitfehlerrate und die gemessene Fading-Frequenz, wobei der erste Wert die Sprachqualität anzeigt.

3. Verfahren nach Anspruch 2, **dadurch gekennzeichnet, dass** Schritt c) ebenfalls den folgenden Teilschritt umfasst: f) Bestimmen, ob die Sprachqualität akzeptabel ist oder nicht, auf der Basis des ersten Werts.

4. Verfahren nach Anspruch 1, **dadurch gekennzeichnet, dass** Schritt c) die folgenden Teilschritte umfasst:
g) Auswählen eines Schwellenwerts für die Bitfehlerrate auf der Basis der gemessenen Fading-Frequenz, wobei der Schwellenwert der Bitfehlerrate derart ausgewählt wird, dass er in einem im Wesentlichen aufsteigendem Bezug zu der gemessenen Fading-Frequenz steht; und
h) Bestimmen, dass die Sprachqualität akzeptabel ist, wenn die gemessene Bitfehlerrate den Schwellenwert der Bitfehlerrate nicht übersteigt.

5. Verfahren nach Anspruch 1, **dadurch gekennzeichnet, dass** Schritt c) die folgenden Teilschritte umfasst:
i) Auswählen eines Schwellenwerts der Fading-Frequenz auf der Basis der gemessenen Bitfehlerrate, wobei der Schwellenwert der Fading-Frequenz derart ausgewählt wird, dass er in einem im Allgemeinen aufsteigenden Bezug zu der gemessenen Bitfehlerrate steht; und
j) Bestimmen, dass die Sprachqualität akzeptabel ist, wenn die gemessene Fading-Frequenz nicht unterhalb des Schwellenwerts der Fading-Frequenz liegt.

6. Verfahren nach einem der Ansprüche 1 bis 5, **dadurch gekennzeichnet, dass** Schritt a) Messen der Bitfehlerrate an der Mobilstation (MS1) im Downlink (41) umfasst; und **dadurch**, dass Schritt b) Messen der Fading-Frequenz an der Funk-Basisstation (BS1) im Uplink (39) umfasst.

7. Verwenden eines Verfahrens nach einem der Ansprüche 1 bis 6 zum Bewerten von Sprachqualität bei Durchführen von Kanalzuweisung, im Bezug auf Sprachkommunikation zwischen einer Mobilstation (MS1) und einer Basisstation (BS 1).

8. Verwenden eines Verfahrens nach einem der Ansprüche 1 bis 6 zum Bewerten von Sprachqualität bei Durchführen von Leistungssteuerung einer Funk-Basisstation in einem digitalen Funk-Telefoniesystem (3).

9. Anordnung zum Bewerten der Qualität eines Funkkanals (37), welcher einen Uplink (39) und einen Downlink (41) aufweist, für Sprachkommunikation zwischen einer Mobilstation (MS1) und einer Funk-Basisstation (BS1) in einem digitalen Funk-Telefoniesystem (3), wobei die Anordnung umfasst:
Mittel zum Messen einer Bitfehlerrate, welche dem Funkkanal (37) zugeordnet ist;
Mittel zum Messen einer Fading-Frequenz, welche dem Funkkanal (37) zugeordnet ist, wobei die Fading-Frequenz eine Anzahl von Zeitpunkten pro Zeiteinheit anzeigt, zu welchen eine empfangene Signalstärke signifikant beeinträchtigt ist; und
Mittel zum Bewerten von Sprachqualität, welche dem Funkkanal (37) zugeordnet ist, auf der Basis der gemessenen Bitfehlerrate und der gemessenen Fading-Frequenz, wobei die Anordnung **dadurch gekennzeichnet ist, dass** die Mittel zum Bewerten von Sprachqualität angepasst sind, einzuberechnen, dass ein Ansteigen in der Bitfehlerrate, von einem Aspekt der Sprachqualität, kompensiert werden kann durch ein Ansteigen in der Fading-Frequenz.

10. Anordnung nach Anspruch 9, **dadurch gekennzeichnet, dass** die Mittel zum Bewerten von Sprachqualität umfassen:
Mittel zum Definieren einer Qualitätsfunktion als eine Funktion der Bitfehlerrate und der Fading-Frequenz, wobei die Qualitätsfunktion eine Sprachqualität anzeigt, welche mit ansteigender Bitfehlerrate abnimmt und mit ansteigender Fading-Frequenz ansteigt; und
Mittel zum Erzeugen eines ersten Werts, entsprechend einer Auswertung der Qualitätsfunktion für die gemessene Bitfehlerrate und die gemessene Fading-Frequenz, wobei der erste Wert die Sprachqualität anzeigt.

11. Anordnung nach Anspruch 10, **gekennzeichnet durch** Mittel zum Bestimmen, ob die Sprachqualität akzeptabel ist oder nicht, auf der Basis des ersten Werts.

12. Anordnung nach Anspruch 9, **dadurch gekennzeichnet, dass** die Mittel zum Bewerten von Sprachqualität umfassen:
Mittel zum Auswählen eines Schwellenwerts der Bitfehlerrate auf der Basis der gemessenen Fading-Frequenz, wobei die Mittel zum Auswählen des Schwellenwerts der Bitfehlerrate angepasst sind, den Schwellenwert so auszuwählen, dass er in einem im Wesentlichen aufsteigendem Bezug zu der gemessenen Fading-Frequenz steht; und
Mittel zum Bestimmen, dass die Sprachqualität akzeptabel ist, wenn die gemessene Bitfehlerrate den Schwellenwert der Bitfehlerrate nicht übersteigt.

13. Anordnung nach Anspruch 9, **dadurch gekennzeichnet, dass** die Mittel zum Bewerten von Sprachqualität umfassen:
Mittel zum Auswählen eines Schwellenwerts der Fading-Frequenz auf der Basis der gemessenen Bitfehlerrate, wobei die Mittel zum Auswählen eines Schwellenwerts der Fading-Frequenz angepasst sind, den Schwellenwert so auszuwählen, dass er in einem im Wesentlichen aufsteigendem Bezug zu der gemessenen Bitfehlerrate steht; und
Mittel zum Entscheiden, dass die Sprachqualität akzeptabel ist, wenn die gemessene Fading-Frequenz nicht unterhalb des Schwellenwerts der Fading-Frequenz liegt.

14. Anordnung nach einem der Ansprüche 9 bis einschließlich 13, **dadurch gekennzeichnet, dass** die Mittel zum Messen der Bitfehlerrate angepasst sind, die Bitfehlerrate an der Mobilstation (MS1) im Downlink (41) zu messen; und **dadurch**, dass die Mittel zum Messen der Fading-Frequenz angepasst sind, die Fading-Frequenz an der Funk-Basisstation (BS1) im Uplink (39) zu messen.

## Revendications

1. Procédé d'estimation de la qualité d'un canal radio (37) ayant une liaison montante (39) et une liaison descendante (41) pour une communication locale entre une station mobile (MS1) et une station de base radio (BS1) dans un système de radiotéléphonie numérique (3), ledit procédé comprenant les étapes de:
a) mesure d'un taux d'erreur binaire associé au canal radio (37);
b) mesure d'une fréquence d'évanouissement associée audit canal radio (37), la fréquence d'évanouissement indiquant en nombre de fois par unité temps qu'une puissance de signal reçue est significativement affaiblie; et
c) estimation d'une qualité vocale associée au canal radio (37) sur la base du taux d'erreur binaire mesuré et de la fréquence d'évanouissement mesurée, le procédé étant **caractérisé en ce que** l'étape (c) comprend la prise en compte qu'une augmentation du taux d'erreur binaire d'un point de vue de l'aspect de la qualité vocale peut être compensée par une augmentation de la fréquence d'évanouissement.

2. Procédé selon la revendication 1, **caractérisé en ce que** l'étape (c) comprend les étapes partielles suivantes:
d) définition d'une fonction qualité en fonction du taux d'erreur binaire et de la fréquence d'évanouissement, la fonction qualité indiquant une qualité vocale qui diminue avec l'augmentation du taux d'erreur binaire et augmente avec l'accroissement de la fréquence d'évanouissement; et
e) génération d'une première valeur correspondant à une évaluation de la fonction qualité par rapport au taux d'erreur binaire mesuré et la fréquence d'évanouissement mesurée, où la première valeur indique la qualité vocale.

3. Procédé selon la revendication 2, **caractérisé en ce que** l'étape (c) comprend aussi l'étape partielle suivante: f) détermination si oui ou non la qualité vocale est acceptable sur la base de la première valeur.

4. Procédé selon la revendication 1, **caractérisé en ce que** l'étape c) comprend les étapes partielles suivantes:
g) sélection d'une valeur de seuil pour le taux d'erreur binaire sur la base de la fréquence d'évanouissement mesurée, la valeur de seuil du taux d'erreur binaire étant sélectionnée pour qu'elle ait une relation essentiellement croissante par rapport à la fréquence d'évanouissement mesurée; et
h) détermination que la qualité vocale est acceptable lorsque le taux d'erreur binaire mesuré n'excède pas la valeur de seuil dudit taux d'erreur binaire.

5. Procédé selon la revendication 1, **caractérisé en ce que** l'étape c) comprend les étapes partielles suivantes:
i) sélection d'une valeur de seuil de fréquence d'évanouissement sur la base du taux d'erreur binaire mesuré, la valeur de seuil de fréquence d'évanouissement étant sélectionnée pour qu'elle ait une relation généralement croissante par rapport au taux d'erreur binaire mesuré; et
j) détermination que la qualité vocale est acceptable lorsque la fréquence d'évanouissement mesurée n'est pas en dessous de la valeur de seuil de fréquence d'évanouissement.

6. Procédé selon l'une quelconque de revendication 1 à 5, **caractérisé en ce que** l'étape a) comprend la mesure du taux d'erreur binaire sur la station mobile (MS1) sur la liaison descendante (41); et **en ce que** l'étape b) comprend la mesure de la fréquence d'évanouissement sur la station de base radio (BS1) sur la liaison montante (39).

7. Utilisation d'un procédé selon l'une quelconque des revendications 1 à 6 pour estimer la qualité vocale lors de la réalisation de l'allocation de canal en ce qui concerne une communication vocale entre une station mobile (MS1) et une station de base (BS1).

8. Utilisation d'un procédé selon l'une quelconque des revendications 1 à 6 pour estimer la qualité vocale lors de la réalisation d'une commande de puissance d'une station de base radio dans un système de radiotéléphonie numérique (3).

9. Disposition pour estimer la qualité d'un canal radio (37) ayant une liaison montante (39) et une liaison descendante (41) pour une communication vocale entre une station mobile (MS1) et une station de base radio (BS1) dans un système de radiotéléphonie numérique (3), ladite disposition comprenant:
un moyen pour mesurer un taux d'erreur binaire associé au canal radio (37);
un moyen pour mesurer une fréquence d'évanouissement associée au canal radio (37), la fréquence d'évanouissement indiquant un nombre de fois par unité de temps où une puissance de signal reçu est significativement affaiblie; et
un moyen pour estimer une qualité vocale associée au canal radio (37) sur la base du taux d'erreur binaire mesuré et de la fréquence d'évanouissement mesurée, la disposition étant **caractérisée en ce que** les moyens pour estimer la qualité vocale sont adaptés pour prendre en compte qu'une augmentation du taux d'erreur binaire d'un point de vue de l'aspect de la qualité vocale peut être compensée par une augmentation de la fréquence d'évanouissement.

10. Disposition selon la revendication 9, **caractérisée en ce que** les moyens pour estimer la qualité vocale comprennent:
un moyen pour définir une fonction qualité en fonction du taux d'erreur binaire et de la fréquence d'évanouissement, la fonction qualité indiquant une qualité vocale qui diminue avec un accroissement du taux d'erreur binaire et augmente avec l'accroissement de la fréquence d'évanouissement; et
un moyen pour générer une première valeur correspondant à une évaluation de la fonction qualité par rapport au taux d'erreur binaire mesuré et la fréquence d'évanouissement mesurée, ladite première valeur indiquant la qualité vocale.

11. Disposition selon la revendication 10, **caractérisée par** des moyens pour déterminer si oui ou non la qualité vocale est acceptable, sur la base de la première valeur.

12. Disposition selon la revendication 9, **caractérisée en ce que** les moyens d'estimation de qualité vocale comprennent:
un moyen pour sélectionner une valeur de seuil de taux d'erreur binaire sur la base de la fréquence d'évanouissement mesurée, le moyen pour sélectionner la valeur de seuil de taux d'erreur binaire étant adapté pour sélectionner ladite valeur de seuil pour qu'elle ait une relation essentiellement croissante par rapport à la fréquence d'évanouissement mesurée; et
un moyen pour déterminer que la qualité vocale est acceptable lorsque le taux d'erreur binaire mesuré n'excède pas la valeur de seuil de taux d'erreur binaire.

13. Disposition selon la revendication 9, **caractérisée en ce que** les moyens d'estimation de qualité vocale comprennent:
un moyen pour sélectionner une valeur de seuil de fréquence d'évanouissement sur la base du taux d'erreur binaire mesuré, le moyen pour sélectionner la valeur de seuil de fréquence d'évanouissement étant adapté pour sélectionner ladite valeur de seuil pour qu'elle ait une relation essentiellement croissante par rapport au taux d'erreur binaire mesuré; et
un moyen pour décider que la qualité vocale est acceptable lorsque la fréquence d'évanouissement mesurée n'est pas en dessous de la valeur de seuil de fréquence d'évanouissement.

14. Disposition selon l'une quelconque des revendications 9 à 13 inclus, **caractérisée en ce que** les moyens pour mesurer le taux d'erreur binaire sont adaptés pour mesurer ledit taux d'erreur binaire sur la station mobile (MS1) sur la liaison descendante (41); et **en ce que** les moyens pour mesurer la fréquence d'évanouissement sont adaptés pour mesurer ladite fréquence d'évanouissement sur la station de base radio (BS1) sur la liaison montante (39).
